## Europäisches Patentamt
## European Patent Office
## Office européen des brevets

(19)

(11) Numéro de publication: **0130191**
**B1**

(12)

# FASCICULE DE BREVET EUROPEEN

(45) Date de publication du fascicule du brevet:
14.05.86

(51) Int. Cl.⁴: **E 04 C 5/01**

(21) Numéro de dépôt: 84900017.9

(22) Date de dépôt: 21.12.83

(86) Numéro de dépôt international:
PCT/BE 83/00023

(87) Numéro de publication internationale:
WO 84/02732 (19.07.84 Gazette 84/17)

(54) ELEMENTS FILIFORMES UTILISABLES POUR LE RENFORCEMENT DE MATERIAUX MOULABLES EN PARTICULIER POUR LE BETON.

(30) Priorité: 30.12.82 BE 209834

(43) Date de publication de la demande:
09.01.85 Bulletin 85/2

(45) Mention de la délivrance du brevet:
14.05.86 Bulletin 86/20

(84) Etats contractants désignés:
CH DE FR GB LI NL SE

(56) Documents cités:
FR - A - 2 160 180
GB - A - 515 003
GB - A - 1 446 855
US - A - 2 677 955

(73) Titulaire: **EUROSTEEL S.A., Chaussée de Neerstalle 425, B-1180 Bruxelles (BE)**

(72) Inventeur: **DESTREE, Xavier, Pierre, Avenue des Noisetiers, 39, B-1170 Bruxelles (BE)**
Inventeur: **LAZZARI, Angelo, Antonio, Avenue Winston Churchill, 224, B-1180 Bruxelles (BE)**

(74) Mandataire: **de Kemmeter, François et al, Cabinet Bede 13, avenue Antoine Depage, B-1050 Bruxelles (BE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention est relative à des éléments filiformes, appelés fibres, pouvant servir pour le renforcement de matériaux moulables à liant de type hydraulique ou non.

Parmi les différents types de fibres pouvant servir à un tel renforcement, figure une famille de fibres filiformes de différentes dimensions munies d'ondulations régulières réparties sur leur longueur.

Dans l'état antérieur de la technique, les fibres appartenant à cette famille ne peuvent pas constituer un renforcement efficace du béton: En effet, pour assurer un ancrage satisfaisant, dans les matériaux à renforcer, il a été utilisé des ondulations d'amplitudes élevées et de petite longueur d'onde. De telles caractéristiques géométriques créent des difficultés très importantes de mise en œuvre lors du malaxage de ces fibres dans le béton du fait de leur très forte propension à s'accrocher entre elles pour former des boules de fibres enchevêtrées dans le béton. De telles difficultés de mise en œuvre ont condamné l'utilisation de ce type de fibres.

Cependant, après une étude de tous les facteurs gouvernant le renforcement du matériau pierreux renforcé par des fibres appartenant à cette famille, on a pu concevoir une fibre ondulée du genre décrit qui soit optimalisée et se distingue des fibres de la technique antérieure par un effet de renforcement réel du béton sans les difficultés de mise en œuvre rencontrées auparavant.

Pour aboutir à une telle conception, il a fallu étudier l'influence des facteurs suivants:
— l'amplitude de l'ondulation
— la longueur d'onde
— la longueur de la fibre
— le diamètre de la fibre
— la nature de l'acier constituant caractérisé principalement par sa résistance à la traction
— la résistance propre de la matrice qui doit être renforcée.

Pour garantir un effet de renforcement efficace dans le béton par exemple, il faut que, quelle que soit la sollicitation exercée sur celui-ci, les fibres y restent le plus longtemps possible ancrées. Une telle condition est satisfaite sans créer aucune difficulté de mise en œuvre, si on adopte les caractéristiques suivantes pour renforcer un béton conventionnel utilisé dans la construction:
— amplitude maximale de l'ondulation de l'axe longitudinal     1 à 1,5 d
   — longueur d'onde maximale     10 d
   — longueur d'onde minimale     7 d
   — longueur de la fibre maximale     65 d
   — longueur de la fibre minimale     45 d
   — nature de l'acier: sa contrainte de traction de rupture est supérieure à 1079 N/mm² (110 kg/mm²) et inférieure à 1472 N/mm² (150 kg/mm²)
   — diamètre (d) de la fibre     1,2 mm au max.

Exemple de fibre optimale utilisée à raison de 20 à 40 kg/m³ de béton soit 0,25 à 0,5% en volume suivant le type d'élément en béton à renforcer:
   — diamètre     1 mm
   — amplitude d'ondulation     1 mm
   — longueur d'onde     8 mm
   — longueur de la fibre     60 mm
   — contrainte de traction de rupture 1275 N/mm² (130 kg/mm²).

Dans les dessins annexés:

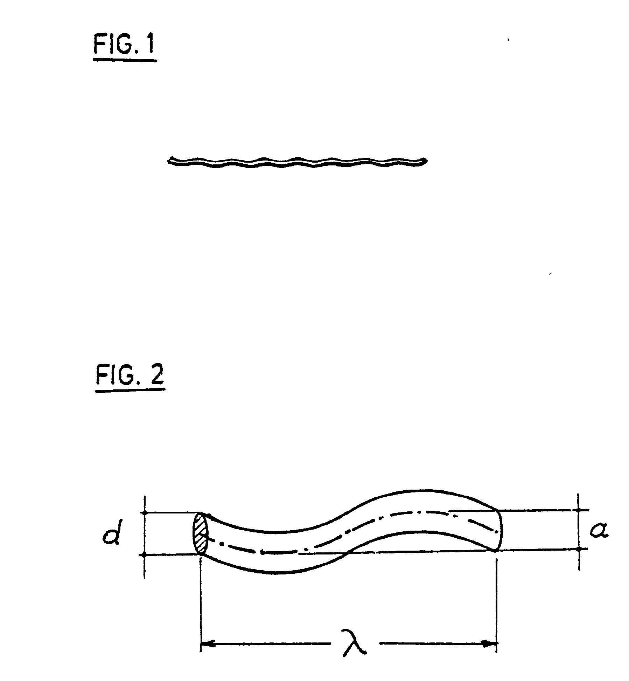

— la figure 1 représente une fibre ondulée à l'échelle 1/1;
— la figure 2 représente à plus grande échelle un fragment de la fibre représentée sur la figure 1.

On distingue le diamètre d, la longueur d'onde λ et l'amplitude a.

Les ondulations sont obtenues de façon connue en soi.

Ainsi, par exemple, un fil bobiné est déroulé et est profilé de manière continue en ondulation par passage entre des galets mâle et femelle en rotation présentant un profil approprié. Le fil est ensuite coupé à longueur à l'intervention d'une paire de roues en rotation dont l'une est dentée et l'autre lisse et dont la vitesse de rotation détermine la longueur du fil coupé.

Il est bien entendu que l'invention n'est pas limitée aux détails décrits plus haut donnés uniquement à titre d'exemple.

## Revendications

1. Elément filiforme utilisable pour le renforcement de matériaux moulables en particulier pour le béton, cet élément filiforme présentant des ondulations régulières réparties sur sa longueur, présentant les caractéristiques suivantes:
   — amplitude maximale de l'ondulation de l'axe longitudinal     1 à 1,5 d
   — longueur d'onde maximale     10 d
   — longueur d'onde minimale     7 d
   — longueur de la fibre maximale     65 d
   — longueur de la fibre minimale     45 d
   — diamètre (d) de la fibre     1,2 mm au max.
   — nature de l'acier: contrainte de traction de rupture supérieure à 1079 N/mm² (110 kg/mm²) et inférieure à 1472 N/mm² (150 kg/mm²).

2. Elément filiforme suivant la revendication 1, caractérisé par:
   — un diamètre de     1 mm
   — une amplitude d'ondulation de     1 mm
   — une longueur d'onde de     8 mm
   — une longueur de     60 mm
   — une contrainte de traction de rupture de 1275 N/mm² (130 kg/mm²).

3. Utilisation d'un élément filiforme tel que défini à la revendication 2 à raison de 0,25 à 0,5% en volume dans un béton conventionnel pour la construction.

## Patentansprüche

1. Fadenförmiges Element zur Verwendung für die Verstärkung von formbaren Werkstoffen, insbesondere Beton, das regelmässige, über seine

2

Länge verteilte Wellungen aufweist, gekennzeichnet durch folgende Merkmale:

maximale Amplitude der Wellung
| | |
|---|---|
| der Längsachse | 1-1,5 d |
| Länge der maximalen Wellung | 10 d |
| Länge der minimalen Wellung | 7 d |
| maximale Länge der Faser | 65 d |
| minimale Länge der Faser | 45 d |
| Faserdurchmesser (d) | 1,2 mm max. |

Art des Stahls: Bruchspannung bei Zugbelastung grösser als 1.079 N/mm² und kleiner als 1.472 N/mm².

2. Fadenförmiges Element nach Anspruch 1, gekennzeichnet durch:

| | |
|---|---|
| einen Durchmesser von | 1 mm |
| eine Wellungsamplitude von | 1 mm |
| eine Wellungslänge von | 8 mm |
| eine Länge von | 60 mm |
| eine Bruchspannung bei Zugbelastung von | 1.275 N/mm². |

3. Verwendung eines fadenförmigen Elementes nach Anspruch 2, gekennzeichnet, durch einen Volumenanteil von 0,25 bis 0,5 Vol.% in einem üblichen Baubeton.

**Claims**

1. Filiform element usable for reinforcing mouldable materials particularly concrete, said filiform element having uniform corrugations distributed over its length, with the following features:

| | |
|---|---|
| — maximum wave amplitude: | 1 to 1.5 d |
| — maximum wave-length: | 10 d |
| — minimum wave-length: | 7 d |
| — maximum fiber length: | 65 d |
| — minimum fiber length: | 45 d |
| — fiber diameter (d): | max. 1.2 mm |
| — nature of the steel: ultimate tensile strength | |
| higher than | 1079 N/mm² |
| and lower than | 1472 N/mm² |

2. Filiform element according to claim 1, characterized by:

| | |
|---|---|
| — a diameter of | 1 mm |
| — a wave amplitude of | 1 mm |
| — a wave-length of | 8 mm |
| — a length of | 60 mm |
| — an ultimate tensile strength of | 1275 N/mm² |

3. The use a filiform element as defined in claim 2 in an amount of 0.25 to 0.5% by volume in a conventional concrete for building.

**FIG. 1**

**FIG. 2**